(19)

Europäisches
Patentamt
European
Patent Office
Office européen
des brevets

(11) **EP 4 317 072 A1**

(12) **EUROPEAN PATENT APPLICATION**
published in accordance with Art. 153(4) EPC

(43) Date of publication:
**07.02.2024 Bulletin 2024/06**

(21) Application number: **22775541.0**

(22) Date of filing: **22.03.2022**

(51) International Patent Classification (IPC):
*C01G 39/02* *(2006.01)*

(52) Cooperative Patent Classification (CPC):
**C01G 39/02**

(86) International application number:
**PCT/JP2022/012990**

(87) International publication number:
**WO 2022/202757 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021 JP 2021050489**

(71) Applicant: **DIC CORPORATION**
**Itabashi-ku**
**Tokyo 174-8520 (JP)**

(72) Inventors:
• **KOIKE, Akihiro**
  **Sakura-shi, Chiba 285-8668 (JP)**
• **KOU, Youki**
  **Sakura-shi, Chiba 285-8668 (JP)**
• **KANO, Yusuke**
  **Sakura-shi, Chiba 285-8668 (JP)**
• **YUAN, Jianjun**
  **Sakura-shi, Chiba 285-8668 (JP)**

(74) Representative: **Kraus & Lederer**
**Patentanwälte PartGmbB**
**Thomas-Wimmer-Ring 15**
**80539 München (DE)**

(54) **MOLYBDENUM TRIOXIDE POWDER AND METHOD FOR PRODUCING SAME**

(57)    Provided is a molybdenum trioxide powder containing an aggregate of primary particles containing a crystal structure of molybdenum trioxide, the crystal structure containing $\alpha$ crystals with an average crystallite size of 50 nm or less, a median diameter $D_{50}$ of the primary particles being 2,000 nm or less determined by dynamic light scattering.

EP 4 317 072 A1

**Description**

Technical Field

The present invention relates to a molybdenum trioxide powder and a production method therefor.
The present application claims priority based on33 Japanese Patent Application No. 2021-050489, filed on March 24, 2021, the content of which is incorporated herein.

Background Art

PTL 1 discloses an apparatus for producing a metal oxide and a method for producing the metal oxide by the flux evaporation method. When a molybdenum compound is used as a flux, powdered molybdenum trioxide is collected.
In addition, PTL 2 discloses a method for producing a nanocrystalline molybdenum mixed oxide and the use of the molybdenum mixed oxide as a catalyst for chemical conversion.

Citation List

Patent Literature

PTL 1: WO 2018/003481
PTL 2: JP-T-2011-516378

Summary of Invention

Technical Problem

When a molybdenum trioxide powder is used as a precursor for molybdenum sulfide, commercially available molybdenum trioxide powders have difficulty in sulfide reactivity. Molybdenum trioxide having higher purity can produce molybdenum sulfide having higher purity, and having lower purity may form impurity-derived sulfides. Usually, sulfides other than molybdenum sulfide are not stable and are easily decomposed by acid, water, or the like, generating hydrogen sulfide, which is highly toxic. Thus, the purity is required to be extremely high from the viewpoint of storage stability (generation of hydrogen sulfide).
The present invention has been made in view of the above circumstances, and an object of the present invention is to provide a molybdenum trioxide powder suitable as a precursor for molybdenum sulfide and a production method therefor.

Solution to Problem

The present invention includes the following aspects.

(1) A molybdenum trioxide powder containing an aggregate of primary particles containing a crystal structure of molybdenum trioxide,

the crystal structure containing $\alpha$ crystals with an average crystallite size of 50 nm or less, and
a median diameter $D_{50}$ of the primary particles being 2,000 nm or less determined by dynamic light scattering.

(2) The molybdenum trioxide powder according to (1), in which a content of $MoO_3$ is 99.5% by mass or more with respect to a total weight of the molybdenum trioxide powder measured by X-ray fluorescence (XRF).
(3) The molybdenum trioxide powder according to (1) or (2), which has a specific surface area of 10 $m^2/g$ or more measured by a BET method.
(4) The molybdenum trioxide powder according to any one of (1) to (3), in which the crystal structure further contains $\beta$ crystals with an average crystallite size of 50 nm or less.
(5) The molybdenum trioxide powder according to (4), in which a ratio ($\beta$ (011)/$\alpha$ (021)) of intensity of a peak attributed to the plane (011) of the $\beta$ crystal of $MoO_3$ to intensity of a peak attributed to the plane (021) of the $\alpha$ crystal of $MoO_3$ is 0.1 or more in the profile obtained by powder X-ray diffraction (XRD) using Cu-K$\alpha$ rays as an X-ray source.
(6) The molybdenum trioxide powder according to (5), in which the ratio ($\beta$ (011)/$\alpha$ (021)) of the intensity of the peak attributed to the plane (011) of the $\beta$ crystal of $MoO_3$ to the intensity of the peak attributed to the plane (021) of the $\alpha$ crystal of $MoO_3$ is 10.0 or less in a profile obtained by the powder X-ray diffraction (XRD) using the Cu-K$\alpha$ rays as the X-ray source.

(7) The molybdenum trioxide powder according to any one of (1) to (6), in which the primary particles have a ribbon shape or a sheet shape having nano-order thickness.

(8) A method for producing the molybdenum trioxide powder according to any one of (1) to (7), the method including:

vaporizing a molybdenum oxide precursor compound to form molybdenum trioxide vapor; and
cooling the molybdenum trioxide vapor.

(9) The method for producing the molybdenum trioxide powder according to (8), further including calcining a raw material mixture containing a molybdenum oxide precursor compound and a metal compound other than the molybdenum oxide precursor compound to vaporize the molybdenum oxide precursor compound and form molybdenum trioxide vapor,

in which a ratio of the metal compound to 100% by mass of the raw material mixture is 95% by mass or less in terms of oxide.

Advantageous Effects of Invention

The present invention can provide a molybdenum trioxide powder suitable as a precursor for molybdenum sulfide and a production method therefor.

Brief Description of Drawings

FIG. 1 is a schematic view of an example of an apparatus used for producing molybdenum trioxide particles as a raw material of molybdenum sulfide particles.
FIG. 2A is a measured XRD profile for Example 1, an $\alpha$ crystal peak position diagram in the uppermost row, and a $\beta$ crystal peak position diagram in the row therebelow (the middle row).
FIG. 2B is an XRD profile for Comparative Example 1 and an $\alpha$ crystal peak position diagram in the upper row.
FIG. 3A is an analysis diagram of crystallite size and diffraction intensity for Example 1.
FIG. 3B is an analysis diagram of crystallite size and diffraction intensity for Comparative Example 1. Description of Embodiments

The following describes embodiments of the present invention in detail with reference to the accompanying drawings.

<Molybdenum Trioxide Powder>

The molybdenum trioxide powder of the present embodiment contains an aggregate of primary particles containing a crystal structure of molybdenum trioxide, the crystal structure containing $\alpha$ crystals with an average crystallite size of 50 nm or less, and a median diameter $D_{50}$ of the primary particles being 2,000 nm or less determined by dynamic light scattering.

The molybdenum trioxide powder of the present embodiment contains an aggregate of primary particles with a median diameter $D_{50}$ of the primary particles of 2,000 nm or less determined by dynamic light scattering and containing a crystal structure of molybdenum trioxide. The crystal structure contains $\alpha$ crystals with an average crystallite size of 50 nm or less. Thus, the molybdenum trioxide powder of the present embodiment has better reactivity with sulfur than conventional molybdenum trioxide powders do.

The molybdenum trioxide powder of the present embodiment has a median diameter $D_{50}$ of the primary particles of preferably 10 nm or more and 2,000 nm or less, more preferably 10 nm or more and 500 nm or less, and still more preferably 10 nm or more and 200 nm or less, which is obtained by dynamic light scattering.

When the median diameter $D_{50}$ of the primary particles is within the above preferred range, the reactivity of the molybdenum trioxide powder with sulfur is likely to be better. The median diameter $D_{50}$ of the primary particles of the molybdenum trioxide powder is calculated from the volume-based cumulative particle size distribution measured, for example, using a dynamic light scattering particle size distribution measuring device.

In the present embodiment, the average particle diameter of the primary particles of the molybdenum trioxide powder refers to an average value of primary particle diameters of 50 primary particles randomly selected when the molybdenum trioxide powder is photographed with a transmission electron microscope (TEM) or a scanning electron microscope (SEM), the major axis (the Feret diameter of the longest portion observed) and the minor axis (the short Feret diameter in a direction perpendicular to the Feret diameter of the longest portion) of the minimum unit particles (that is, the primary particles) constituting aggregates on a two-dimensional image are measured, and an average value thereof is defined as the primary particle diameter.

In the present embodiment, the average crystallite size of the $\alpha$ crystals contained in the crystal structure of molybdenum trioxide is preferably 5 nm or more and 50 nm or less, more preferably 5 nm or more and 45 nm or less, still more preferably 10 nm or more and 40 nm or less, and particularly preferably 10 nm or more and 35 nm or less.

When the average crystallite size of the $\alpha$ crystals is within the above preferred range, the reactivity of the molybdenum trioxide powder with sulfur tends to be better.

The content of $MoO_3$ measured by X-ray fluorescence (XRF) with respect to the total mass of the molybdenum trioxide powder of the present embodiment is preferably 99.5% by mass or more, more preferably 99.7% by mass or more, and still more preferably 99.9% by mass or more with respect to the total detected peak intensity.

When the content of $MoO_3$ is within the above preferred range, it is easy to obtain molybdenum sulfide having high purity and good storage stability with no risk of forming impurity-derived sulfides by subjecting the molybdenum trioxide powder of the present embodiment to a sulfidation reaction. Thus, the molybdenum trioxide powder of the present embodiment can be suitably used as a precursor for molybdenum sulfide.

The reactivity of the molybdenum trioxide powder with sulfur can be evaluated, for example, by mixing together 1.00 g of the molybdenum trioxide powder to be evaluated and 1.57 g of sulfur, calcining the mixture at 400°C for 4 hours in a nitrogen atmosphere, and determining the conversion rate of the resulting black powder to $MoS_2$.

The conversion rate to $MoS_2$ can be obtained by a reference intensity ratio (RIR) method based on a profile obtained by measuring this black powder with the X-ray diffraction (XRD). The conversion rate $R_C$ to $MoS_2$ can be obtained according to the following equation (1) using an RIR value $K_A$ of molybdenum sulfide ($MoS_2$), integrated intensity $I_A$ of a peak in the vicinity of $2\theta = 14.4° \pm 0.5°$ attributed to the plane (002) or the plane (003) of molybdenum sulfide ($MoS_2$), an RIR value $K_B$ of each molybdenum oxide ($MoO_3$ as a raw material, and $Mo_9O_{25}$, $Mo_4O_{11}$, $MoO_2$, etc. as reaction intermediates), and integrated intensity $I_B$ of the strongest line peak of each molybdenum oxide ($MoO_3$ as a raw material, and $Mo_9O_{25}$, $Mo_4O_{11}$, $MoO_2$, etc. as reaction intermediates).

$$R_C\ (\%)\ =\ (I_A/K_A)/(\Sigma(I_B/K_B))\ \times\ 100\qquad(1)$$

Here, values described in the ICSD database can be used as the RIR values, and integrated X-ray powder diffraction software (Rigaku Corporation, PDXL Version 2) can be used for analysis.

In the molybdenum trioxide powder of the present embodiment, the specific surface area is preferably 10 $m^2/g$ or more, more preferably 20 $m^2/g$ or more, and still more preferably 30 $m^2/g$ or more from the viewpoint of good reactivity with sulfur. In the molybdenum trioxide powder of the present embodiment, the specific surface area is preferably 100 $m^2/g$ or less and may be 90 $m^2/g$ or less or 80 $m^2/g$ or less from the viewpoint of facilitation in production.

In the present embodiment, the crystal structure of molybdenum trioxide may further contain $\beta$ crystals with an average crystallite size of 50 nm or less. When the crystal structure of molybdenum trioxide contains the $\alpha$ crystals and the $\beta$ crystals, the reactivity of the molybdenum trioxide powder with sulfur is likely to be better.

In the present embodiment, the average crystallite size of the $\beta$ crystals contained in the crystal structure of molybdenum trioxide is preferably 5 nm or more and 50 nm or less, more preferably 5 nm or more and 45 nm or less, still more preferably 10 nm or more and 40 nm or less, and particularly preferably 10 nm or more and 30 nm or less. When the average crystallite size of the $\beta$ crystals is within the above preferred range, the reactivity of the molybdenum trioxide powder with sulfur is likely to be better.

In the present embodiment, an $\alpha$ crystal structure of molybdenum trioxide can be observed by the presence of a peak of the plane (021) (in the vicinity of $2\Theta$: 27.32°, No. 166363 (inorganic crystal structure database, ICSD)) of an $\alpha$ crystal of $MoO_3$. The $\beta$ crystal structure can be observed by the presence of a peak (in the vicinity of $2\Theta$: 23.01°, No. 86426 (inorganic crystal structure database, ICSD)) attributed to the plane (011) of a $\beta$ crystal of $MoO_3$ in a profile obtained by the powder X-ray diffraction (XRD) using the Cu-K$\alpha$ rays as the X-ray source.

The molybdenum trioxide powder of the present embodiment preferably has a ratio ($\beta$ (011)/$\alpha$ (021)) of intensity of a peak attributed to the plane (011) of the $\beta$ crystal of $MoO_3$ to intensity of a peak attributed to the plane (021) of the $\alpha$ crystal of $MoO_3$ of 0.1 or more, more preferably 0.2 or more, and still more preferably 0.4 or more, in the profile obtained by the powder X-ray diffraction (XRD) using the Cu-K$\alpha$ rays as the X-ray source.

In the molybdenum trioxide particles of the present embodiment, the ratio ($\beta$ (011)/$\alpha$ (021)) is preferably 10.0 or less.

From the intensity of the peak attributed to the plane (011) of the $\beta$ crystal of $MoO_3$ and the intensity of the peak attributed to the plane (021) of the $\alpha$ crystal of $MoO_3$, each maximum peak intensity is read to obtain the ratio ($\beta$

(011)/α (021)).

In the molybdenum trioxide powder of the present embodiment, the ratio (β (011)/α (021)) is preferably 0.1 to 10.0, more preferably 0.2 to 10.0, and particularly preferably 0.4 to 10.0.

The content of the α crystals of the molybdenum trioxide powder of the present embodiment is not particularly limited and may be 20% or more, 50% or more, 70% or more, 80% or more, or even 100%.

In a mixture of the α crystals and the β crystals of $MoO_3$, the content of the α crystals of $MoO_3$ can be obtained by the reference intensity ratio (RIR) method based on the obtained profile data. The content (%) of the α crystals of $MoO_3$ can be obtained according to the following equation (2) using the RIR value $K_A$ of the α crystal of $MoO_3$, the integrated intensity $I_A$ of the plane (021) of the α crystal of $MoO_3$ (in the vicinity of 2Θ: 27.32°_No. 166363 (inorganic crystal structure database, ICSD)), the RIR value $K_B$ of the β crystal of $MoO_3$, and the integrated intensity $I_B$ (in the vicinity of 2Θ: 23.01°, No. 86426 (inorganic crystal structure database, ICSD)), which is attributed to the plane (011) of the β crystal of $MoO_3$.

$$\text{Content (\%) of } \alpha \text{ crystals of } MoO_3 = (I_A/K_A)/((I_A/K_A) + (I_B/K_B)) \times 100 \quad \cdots (2)$$

Here, values described in the ICSD database can be used as the RIR values, and integrated X-ray powder diffraction software (PDXL Version 2 manufactured by Rigaku Corporation) can be used for analysis.

In the molybdenum trioxide powder of the present embodiment, the primary particles in a two-dimensional image when photographed with a transmission electron microscope (TEM) may have a particulate shape, a spherical shape, a plate shape (a sheet shape), a needle shape, a string shape, or a ribbon shape in visual observation or an image photograph, and these shapes may be contained in combination. In the present embodiment, the primary particles of the molybdenum trioxide powder may have a ribbon shape or a sheet shape having nano-order thickness. The shape of 50 primary particles of the molybdenum trioxide particles on average preferably has a size in a range of length (longitudinal) × width (lateral) = 10 nm to 500 nm×10 nm to 500 nm, more preferably has a size in a range of 10 nm to 200 nm × 10 nm to 200 nm, and particularly preferably has a size in a range of 10 nm to 100 nm×10 nm to 100 nm.

The β crystal structure of molybdenum trioxide can also be confirmed by the presence of peaks at wavenumbers of 773 cm$^{-1}$, 848 cm$^{-1}$, and 905 cm$^{-1}$ in a Raman spectrum obtained by Raman spectroscopic measurement. The α crystal structure of molybdenum trioxide can be confirmed by the presence of peaks at wavenumbers of 663 cm$^{-1}$, 816 cm$^{-1}$, and 991 cm$^{-1}$.

The molybdenum trioxide powder of the present embodiment has good reactivity with sulfur and is thus useful as a raw material for molybdenum sulfide ($MoS_2$). In addition, the molybdenum trioxide powder of the present embodiment can be made highly pure and can thus be used on an industrial grade. The molybdenum trioxide powder of the present embodiment is expected to be used in various catalytic applications.

<Method for Producing Molybdenum Trioxide Powder>

The method for producing a molybdenum trioxide powder of the present embodiment is a method for producing the molybdenum trioxide powder of the embodiment and includes vaporizing a molybdenum oxide precursor compound to form molybdenum trioxide vapor and cooling the molybdenum trioxide vapor.

The method for producing a molybdenum trioxide powder of the present embodiment includes calcining a raw material mixture containing a molybdenum oxide precursor compound and a metal compound other than the molybdenum oxide precursor compound to vaporize the molybdenum oxide precursor compound and form molybdenum trioxide vapor. The ratio of the metal compound to 100% by mass of the raw material mixture is preferably 70% by mass or less in terms of oxide.

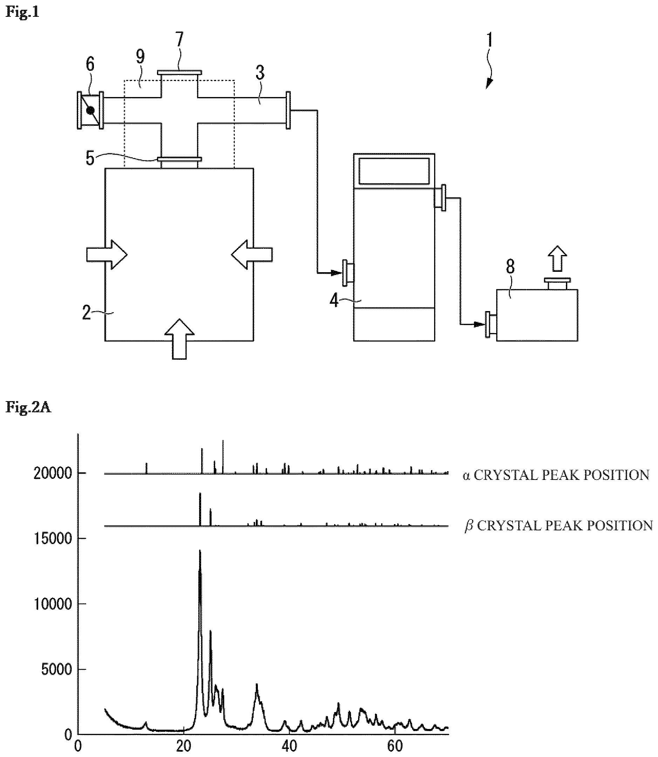

The method for producing a molybdenum trioxide powder of the present embodiment can be suitably carried out by using a production apparatus 1 illustrated in FIG. 1.

FIG. 1 is a schematic view of an example of an apparatus used for producing the molybdenum trioxide powder of the present embodiment. The production apparatus 1 includes a calcining furnace 2 for calcining a molybdenum oxide precursor compound or the raw material mixture to vaporize the molybdenum oxide precursor compound, a cross-shaped cooling pipe 3 connected to the calcining furnace 2 for powdering the molybdenum trioxide vapor vaporized by the calcining, and a collection device 4 as a collection unit for collecting the molybdenum trioxide powder powdered in the cooling pipe 3. At this time, the calcining furnace 2 and the cooling pipe 3 are connected to each other via a discharge port 5. Further, in the cooling pipe 3, an opening degree adjustment damper 6 is disposed at an outside air intake port (not illustrated) at a left end portion, and an observation window 7 is disposed at an upper end portion. An air exhauster 8, which is a first air blowing unit, is connected to the collection device 4. When the air exhauster 8 exhausts air, the collection device 4 and the cooling pipe 3 suction the air, and the outside air is blown into the cooling pipe 3 from the opening degree adjustment damper 6 of the cooling pipe 3. That is, the air exhauster 8 passively blows air to the cooling pipe 3 by exhibiting a suction function. In addition, the production apparatus 1 may include an external cooling device 9, which makes it possible to freely control cooling conditions for the molybdenum trioxide vapor generated from the calcining furnace 2.

The molybdenum oxide precursor compound is not particularly limited as long as it is a precursor compound for forming the molybdenum trioxide powder of the present invention.

The molybdenum oxide precursor compound is not particularly limited as long as it forms molybdenum trioxide vapor by being calcined, and examples thereof include metal molybdenum, molybdenum trioxide, molybdenum dioxide, molybdenum sulfide, ammonium molybdate, phosphomolybdic acid ($H_3PMo_{12}O_{40}$), silicomolybdic acid ($H_4SiMo_{12}O_{40}$), aluminum molybdate, silicon molybdate, magnesium molybdate ($MgMo_nO_{3n+1}$ (n = 1 to 3)), sodium molybdate ($Na_2Mo_nO_{3n+1}$ (n = 1 to 3)), titanium molybdate, ferric molybdate, potassium molybdate ($K_2Mo_nO_{3n+1}$ (n = 1 to 3)), zinc molybdate, boron molybdate, lithium molybdate ($Li_2Mo_nO_{3n+1}$ (n = 1 to 3)), cobalt molybdate, nickel molybdate, manganese molybdate, chromium molybdate, cesium molybdate, barium molybdate, strontium molybdate, yttrium molybdate, zirconium molybdate, and copper molybdate. These molybdenum oxide precursor compounds may be used alone or in combination of two or more thereof. The form of the molybdenum oxide precursor compound is not particularly limited, and for example, the molybdenum oxide precursor compound may be in a powder form such as molybdenum trioxide, or may be in a liquid form such as an aqueous solution of ammonium molybdate. The molybdenum oxide precursor compound is preferably in the powder form having good handling properties and good energy efficiency.

As the molybdenum oxide precursor compound, commercially available α-crystal molybdenum trioxide is preferably used. Further, when ammonium molybdate is used as the molybdenum oxide precursor compound, the ammonium molybdate is converted by calcining into molybdenum trioxide that is thermodynamically stable, and thus the molybdenum oxide precursor compound to be vaporized becomes molybdenum trioxide.

Among these molybdenum oxide precursor compounds, molybdenum trioxide is preferably contained from the viewpoint of easily controlling the purity of the obtained molybdenum trioxide powder, the average particle diameter of the primary particles, and the crystal structure.

The molybdenum trioxide vapor can also be formed by calcining a raw material mixture containing a molybdenum oxide precursor compound and a metal compound other than the molybdenum oxide precursor compound.

The metal compound other than the molybdenum oxide precursor compound is not particularly limited, and examples thereof include an aluminum compound, a silicon compound, a titanium compound, a magnesium compound, a sodium compound, a potassium compound, a zirconium compound, an yttrium compound, a zinc compound, a copper compound, and an iron compound. Among these, it is preferable to use an aluminum compound, a silicon compound, a titanium compound, or a magnesium compound.

The molybdenum oxide precursor compound and the metal compound other than the molybdenum oxide precursor compound may form an intermediate, but even in this case, the intermediate is decomposed by calcining, and molybdenum trioxide can be vaporized in a thermodynamically stable form.

Among these compounds used as the metal compound other than the molybdenum oxide precursor compound, an aluminum compound is preferably used to prevent damage to a calcining furnace, and the metal compound other than the molybdenum oxide precursor compound may not be used to improve the purity of the molybdenum trioxide powder.

Examples of the aluminum compound include aluminum chloride, aluminum sulfate, basic aluminum acetate, aluminum hydroxide, boehmite, pseudo-boehmite, transition aluminum oxides (γ-aluminum oxide, δ-aluminum oxide, θ-aluminum oxide, etc.), α-aluminum oxide, and a mixed aluminum oxide having two or more crystal phases.

When a raw material mixture containing a molybdenum oxide precursor compound and a metal compound other than the molybdenum oxide precursor compound is calcined, the content of the molybdenum oxide precursor compound is preferably 5% by mass to 100% by mass, and may be 10% by mass to 100% by mass or 20% by mass to 100% by mass with respect to 100% by mass of the raw material mixture.

The calcining temperature varies depending on the molybdenum oxide precursor compound, the metal compound, and the like to be used, and the desired molybdenum trioxide powder, and is usually preferably a temperature at which the intermediate can be decomposed. For example, since aluminum molybdate can be formed as an intermediate when a molybdenum compound is used as the molybdenum oxide precursor compound and an aluminum compound is used as the metal compound, the calcining temperature is preferably 500°C to 1,500°C, more preferably 600°C to 1,550°C, and still more preferably 700°C to 1,600°C.

The calcining time is not particularly limited, and may be, for example, 1 minute or more, 1 minute to 30 hours, 10 minutes to 25 hours, or 100 minutes to 20 hours.

The temperature rising rate varies depending on the molybdenum oxide precursor compound and the metal compound to be used, and the properties of the desired molybdenum trioxide powder, and is preferably 0.1°C/min to 100°C/min, more preferably 1°C/min to 50°C/min, and still more preferably 2°C/min to 10°C/min from the viewpoint of production efficiency.

The internal pressure in the calcining furnace is not particularly limited, and may be a positive pressure or a reduced pressure, but from the viewpoint of suitably discharging the molybdenum oxide precursor compound from the calcining furnace to the cooling pipe, the calcining is preferably performed under a reduced pressure. Specifically, the degree of pressure reduction is preferably -5,000 Pa to -10 Pa, more preferably -2,000 Pa to -20 Pa, and still more preferably -1,000 Pa to -50 Pa. When the degree of pressure reduction is -5,000 Pa or more, high airtightness and mechanical strength of the calcining furnace are not excessively required, and production costs can be reduced, which is preferable. When the degree of pressure reduction is -10 Pa or less, clogging of the molybdenum oxide precursor compound at a discharge port of the calcining furnace can be prevented, which is preferable.

When a gas is blown into the calcining furnace during calcining, the temperature of the blown gas is preferably 5°C to 500°C, and more preferably 10°C to 100°C.

Further, the blowing speed of the gas is preferably 1 L/min to 500 L/min, and more preferably 10 L/min to 200 L/min with respect to 100 L of an effective volume of the calcining furnace.

The temperature of the vaporized molybdenum trioxide vapor varies depending on the type of the molybdenum oxide precursor compound to be used, and is preferably 200°C to 2,000°C, and more preferably 400°C to 1,500°C. When the temperature of the vaporized molybdenum trioxide vapor is 2,000°C or lower, usually, the vapor tends to be easily turned into a powder by blowing outside air (0°C to 100°C) to the cooling pipe.

The discharge rate of the molybdenum trioxide vapor discharged from the calcining furnace can be controlled based on the amount of the molybdenum oxide precursor compound to be used, the amount of the metal compound to be used, the temperature of the calcining furnace, blowing of the gas into the calcining furnace, and the diameter of the discharge port of the calcining furnace. The discharge rate also varies depending on the cooling capacity of the cooling pipe, and the discharge rate of the molybdenum trioxide vapor discharged from the calcining furnace to the cooling pipe is preferably 0.001 g/min to 100 g/min, and more preferably 0.1 g/min to 50 g/min.

Further, the content of the molybdenum trioxide vapor contained in the gas discharged from the calcining furnace is preferably 0.01 mg/L to 1,000 mg/L, and more preferably 1 mg/L to 500 mg/L.

Next, the molybdenum trioxide vapor is cooled to be powdered.

The molybdenum trioxide vapor is cooled by lowering the temperature of the cooling pipe. In this case, examples of a cooling method include cooling by blowing a gas into the cooling pipe as described above, cooling by a cooling mechanism included in the cooling pipe, and cooling by an external cooling device.

The cooling temperature (temperature of the cooling pipe) is not particularly limited, and is preferably -100°C to 600°C, and more preferably -50°C to 400°C.

The cooling rate of the molybdenum trioxide vapor is not particularly limited, and is preferably 100°C/s to 100,000°C/s, and more preferably 1,000°C/s to 50,000°C/s. As the cooling rate of the molybdenum trioxide vapor increases, a molybdenum trioxide powder having a small particle diameter and a large specific surface area tends to be obtained.

When the cooling method is cooling by blowing a gas into the cooling pipe, the temperature of the blown gas is preferably -100°C to 300°C, and more preferably -50°C to 100°C.

Further, the blowing speed of the gas is preferably 0.1 $m^3$/min to 20 $m^3$/min, and more preferably 1 $m^3$/min to 10 $m^3$/min. When the blowing speed of the gas is 0.1 $m^3$/min or more, a high cooling rate can be achieved, and clogging in the cooling pipe can be prevented, which is preferable. In contrast, when the blowing speed of the gas is 20 $m^3$/min or less, the first air blowing unit (such as an air exhauster) which is expensive is no longer needed, and production costs can be reduced, which is preferable.

The powder obtained by cooling the molybdenum trioxide vapor is transported to the collection device for collection.

In the method for producing a molybdenum trioxide powder of the present embodiment, the powder obtained by cooling the molybdenum trioxide vapor may be calcined again at a temperature of 100°C to 500°C.

That is, the molybdenum trioxide powder obtained by the method for producing a molybdenum trioxide powder of the present embodiment may be calcined again at a temperature of 100°C to 500°C. The calcining temperature in the re-calcining may be 120°C to 450°C or 140°C to 400°C. The calcining time in the re-calcining may be, for example, 1 minute to 4 hours, 10 minutes to 5 hours, or 100 minutes to 6 hours. A part of the β crystal structure of molybdenum trioxide disappears due to re-calcining, and when calcining is performed at a temperature of 350°C or higher for 4 hours, the β crystal structure of the molybdenum trioxide powder disappears, the ratio (β (011)/α (021)) is 0, and molybdenum trioxide the crystal structures of which are all α crystals (100%) is obtained.

When the molybdenum trioxide powder obtained by the method for producing a molybdenum trioxide powder of the present embodiment is left for 1 day to 2 weeks at an ambient temperature of 5°C to 200°C and a humidity of 50% to 95% also, the β crystal structure of the molybdenum trioxide powder disappears, the ratio (β (011)/α (021)) is zero, and molybdenum trioxide the crystal structures of which are all α crystals (100%) is obtained.

When the molybdenum trioxide powder obtained by the method for producing a molybdenum trioxide powder of the present embodiment is left to obtain molybdenum trioxide the crystal structures of which are all $\alpha$ crystals (100%) is obtained, the ambient temperature may be 5°C to 200°C or 15°C to 100°C. The humidity may be 50% to 95% or 70% to 95%. The leaving time may be 1 day to 2 weeks or 1 day to 1 week.

According to the method for producing a molybdenum trioxide powder of the present embodiment, a molybdenum trioxide powder of all $\alpha$ crystals (100%) can be obtained.

[Examples]

Next, the invention will be described in more detail with reference to Examples, but the invention is not limited by these Examples.

[Method for Measuring Average Particle Diameter of Primary Particles of Molybdenum Trioxide Powder]

0.1 g of the molybdenum trioxide powder was added to 10 cc of ethanol and subjected to an ultrasonic treatment in an ice bath for 4 hours, and then the concentration thereof was appropriately adjusted with ethanol to a concentration within a measurable range of a dynamic light scattering-type particle diameter distribution measuring device (Nanotrac Wave II manufactured by MicrotracBEL) to obtain a measurement sample. Using the measurement sample, the particle diameter distribution in the range of particle diameters of 0.0001 um to 10 um was measured by a dynamic light scattering-type particle diameter distribution measuring device (Nanotrac Wave II manufactured by MicrotracBEL) to calculate the median diameter $D_{50}$. However, for those having a median diameter $D_{50}$ of more than 10 um, a solution was similarly adjusted, and the particle diameter distribution in the range of particle diameters of 0.015 um to 500 um was measured with a laser diffraction particle size distribution analyzer (SALD-7000 manufactured by Shimadzu Corporation) to calculate the median diameter $D_{50}$.

The molybdenum trioxide particles constituting the molybdenum trioxide powder were dispersed in ethanol, the shape of the minimum unit constituting independent particles or aggregates on a transmission electron microscope (TEM, JEM1400 manufactured by JEOL Ltd.) two-dimensional image was observed, the major axis (the Feret diameter of the longest portion observed) and the minor axis (the short Feret diameter in a direction perpendicular to the Feret diameter of the longest portion) were measured, and an average value thereof was acquired as the primary particle diameter. The same operation was performed on 50 primary particles randomly selected, and the average particle diameter of the primary particles was calculated based on the average value of the primary particle diameters of these primary particles. For particles larger than 1 micron in particular, they were also photographed by a scanning electron microscope (SEM) to acquire an average primary particle diameter as a reference value.

[Crystal Structure Analysis of Molybdenum Trioxide Powder: XRD Method]

A sample of the molybdenum compound obtained in each of Examples was filled in a holder for a measurement sample having a depth of 0.5 mm, set in a wide-angle X-ray diffraction (XRD) apparatus (Ultima IV manufactured by Rigaku Corporation, the optical system: the parallel beam method for the incident side + the scintillation counter detector, the rotary stage was used), and was subjected to measurement under conditions of Cu/K$\alpha$ rays, 40 kV/40 mA, a scanning speed of 0.3°/min, a step of 0.02°, and a scanning range of 10° or more and 70° or less.

[Method for Measuring Crystallite Size of Molybdenum Trioxide Powder]

Using XRD profile analysis software (PDXL Version 2) manufactured by Rigaku Corporation, the XRD instrumental constant was determined using LaB6 (NIST SRM660c LaB6 Standard Powder) as the standard substance, and the Scherrer method (using the Scherrer constant K = 0.94) was used to evaluate the crystallite size.

[Shape of Molybdenum Trioxide Particle]

The molybdenum trioxide particles constituting the molybdenum trioxide powder were dispersed in ethanol, and the shape of the smallest unit constituting independent particles or aggregates on a transmission electron microscope (TEM, JEM1400 manufactured by JEOL Ltd.) two-dimensional image was observed.

[Purity Measurement of Molybdenum Trioxide: XRF Analysis]

About 70 mg of a sample of a molybdenum trioxide powder collected was taken on a filter paper and covered with a PP film, and the composition analysis was performed using an X-ray fluorescence analyzer Primus IV (manufactured by Rigaku Corporation). The amount of molybdenum determined based on an XRF analysis result was determined in terms of molybdenum trioxide (% by mass) with respect to 100% by mass of the molybdenum trioxide powder.

[Method for Measuring Specific Surface Area of Molybdenum Trioxide Powder: BET Method]

A sample of the molybdenum trioxide powder or the molybdenum sulfide powder was measured with a specific surface area meter (BELSORP-mini manufactured by MicrotracBEL), and the surface area per gram of the sample measured based on the amount of the adsorbed nitrogen gas by the BET method was calculated as the specific surface area ($m^2/g$).

[Conversion Rate of Molybdenum Trioxide Powder to $MoS_2$]

1.00 g of the molybdenum trioxide powder to be evaluated and 1.57 g of sulfur were mixed with each other and calcined at 400°C for 4 hours in a nitrogen atmosphere, and the obtained black powder was subjected to X-ray diffraction (XRD) measurement. Next, by the reference intensity ratio (RIR) method, the conversion rate $R_C$ to $MoS_2$ was obtained according to the following equation (1) using the RIR value $K_A$ of molybdenum sulfide ($MoS_2$), the integrated intensity $I_A$ of the peak in the vicinity of $2\theta = 14.4° \pm 0.5°$ attributed to the plane (002) or the plane (003) of molybdenum sulfide ($MoS_2$), the RIR value $K_B$ of each molybdenum oxide ($MoO_3$ as a raw material, and $Mo_9O_{25}$, $Mo_4O_{11}$, $MoO_2$, etc. as reaction intermediates), and the integrated intensity $I_B$ of the strongest line peak of each molybdenum oxide ($MoO_3$ as a raw material, and $Mo_9O_{25}$, $Mo_4O_{11}$, $MoO_2$, etc. as reaction intermediates).

$$R_C \ (\%) \ = \ (I_A/K_A)/(\Sigma(I_B/K_B)) \ \times \ 100 \quad (1)$$

Here, values described in the ICSD database were used as the RIR values, and integrated X-ray powder diffraction software (PDXL Version 2 manufactured by Rigaku Corporation) was used for analysis.
The conversion rate to $MoS_2$ was evaluated in accordance with the following criteria.

A: Conversion rate of 95% or more
B: Conversion rate of less than 95%

[Example 1]

An RHK simulator (manufactured by NORITAKE CO., LIMITED) was used as a calcining furnace, and a VF-5N dust collector (manufactured by AMANO Corporation) was used as a dust collector to produce molybdenum trioxide.
1.5 kg of aluminum hydroxide (manufactured by Nippon Light Metal Company, Ltd.) and 1 kg of molybdenum trioxide (manufactured by NIPPON INORGANIC COLOUR & CHEMICAL CO.,LTD.) were mixed with each other, and the mixture was then charged into a sagger and calcined at a temperature of 1,100°C for 10 hours. During the calcining, outside air (blowing speed: 150 L/min, outside air temperature: 25°C) was introduced from a side surface and a lower surface of the calcining furnace. Since molybdenum trioxide is evaporated in the furnace and then cooled in the vicinity of the dust collector to be precipitated as particles, molybdenum oxide (1) was collected by the dust collector.
After calcining, 1.0 kg of aluminum oxide, a blue powder, and 0.8 kg of molybdenum trioxide (1) collected by the dust collector were taken out from the sagger. The collected molybdenum trioxide (1) had a primary particle median diameter $D_{50}$ of 87.8 nm determined by dynamic light scattering, and the particle shape observed with TEM was a ribbon shape or a particulate shape. X-ray fluorescence measurement showed that the purity (the content of $MoO_3$) of molybdenum trioxide (1) was 99.9% by mass.
Crystal structure analysis of molybdenum trioxide (1) by X-ray diffraction (XRD) was performed to observe peaks attributed to $\alpha$-crystal molybdenum trioxide and $\beta$-crystal molybdenum trioxide, with no other peaks observed. Next, the peak intensity ratio between the plane (011) of the $\beta$ crystal and the plane (021) of the $\alpha$ crystal was compared to each other, and $\beta$ (011)/$\alpha$ (021) was 4. Furthermore, using XRD profile analysis software PDXL Version 2 manufactured by Rigaku Corporation, the XRD instrumental constant was determined using LaB6 (NIST SRM660c LaB6 Standard Powder) as the standard substance, and the Scherrer method was used to evaluate the crystallite size to find that molybdenum trioxide (1) had a crystal structure containing the $\alpha$ crystals with an average crystallite size of 15.7 nm and the $\beta$ crystals with an average crystallite size of 16.8 nm.
In a mixture of the $\alpha$ crystals and the $\beta$ crystals of $MoO_3$, the content of the $\alpha$ crystals of $MoO_3$ can be obtained by the reference intensity ratio (RIR) method based on the obtained profile data. The content (%) of the $\alpha$ crystals of $MoO_3$ can be obtained according to the following equation (2) using the RIR value $K_A$ of the $\alpha$ crystal of $MoO_3$, the integrated intensity $I_A$ of the plane (021) of the $\alpha$ crystal of $MoO_3$ (in the vicinity of $2\Theta$: 27.32°_No. 166363 (inorganic crystal structure database, ICSD)), the RIR value $K_B$ of the $\beta$ crystal of $MoO_3$, and the integrated intensity $I_B$ (in the vicinity of 2Θ: 23.01°, No. 86426 (inorganic crystal structure database, ICSD)), which is attributed to the plane (011) of the β crystal of $MoO_3$.

$$\texttt{Content (\%) of } \alpha \texttt{ crystals of MoO}_3 = (I_A/K_A)/((I_A/K_A) +}$$

$$(I_B/K_B)) \times 100 \cdots (2)$$

Here, values described in the ICSD database can be used as the RIR values, and integrated X-ray powder diffraction software (PDXL Version 2 manufactured by Rigaku Corporation) can be used for analysis. The content of the α crystals of $MoO_3$ obtained from the equation (2) was 30%.

1.00 g (6.94 mmol) of molybdenum trioxide (1) and 1.56 g (48.6 mmol) of sulfur (manufactured by Kanto Chemical Co., Inc., powder) were mixed with each other and calcined at 400°C for 4 hours in a nitrogen atmosphere using a high-temperature tube furnace (TSS type, Yamada Denki Co., Ltd.) to obtain 1.12 g of a black powder. After performing structural analysis of this black powder by XRD, it was found that the conversion rate to $MoS_2$ was 99.9%, and the reaction with sulfur occurred rapidly.

[Example 2]

After storing molybdenum trioxide calcined in the same manner as in Example 1 above at 95% humidity and 50°C for 5 days, molybdenum trioxide (2) with particles grown in a ribbon or needle shape (1 to 2 μm in length), all of which were the α crystals (100%), was collected. The average crystallite size of the α crystals was 20.4 nm. X-ray fluorescence measurement showed that the purity (the content of $MoO_3$) of molybdenum trioxide (2) was 99.9% by mass.

Molybdenum sulfide was obtained in the same manner as in Example 1 except that molybdenum trioxide (2) was used instead of molybdenum trioxide (1). After performing structural analysis of the obtained black powder by XRD, it was found that the conversion rate to $MoS_2$ was 99.9%, and the reaction with sulfur occurred rapidly.

[Example 3]

After heat treatment of molybdenum trioxide calcined in the same manner as in Example 1 above at 355°C for 3 hours, molybdenum trioxide (3) with the particles grown into ribbons or large particles, all of which were the α crystals (100%), was collected. The average crystallite size of the α crystals was 27.6 nm.

Molybdenum sulfide was obtained in the same manner as in Example 1 except that molybdenum trioxide (3) was used instead of molybdenum trioxide (1). After performing structural analysis of the obtained black powder by XRD, it was found that the conversion rate to $MoS_2$ was 99.9%, and the reaction with sulfur occurred rapidly.

[Comparative Example 1]

1.00 g (6.94 mmol) of commercially available micro-sized molybdenum trioxide (1') (manufactured by NIPPON INORGANIC COLOUR & CHEMICAL CO.,LTD., Lot No.: 00501-C) and 1.56 g (48.6 mmol) of sulfur (manufactured by Kanto Chemical Co., Inc., powder) were mixed with each other and calcined at 400°C for 4 hours in a nitrogen atmosphere using a high-temperature tube furnace (TSS type, Yamada Denki Co., Ltd.) to obtain 1.13 g of a black powder. After performing structural analysis of this black powder by XRD, it was found that this was a mixture of $MoS_2$, $MoO_2$, and $MoO_3$, and reactivity with sulfur was low.

Crystal structure analysis of molybdenum trioxide (1') by XRD was performed as in Example 1, and molybdenum trioxide (1') was all the α crystal structure. The crystallite size was evaluated as in Example 1, and the average crystallite size of the α crystals of molybdenum trioxide (1') was 57.0 nm. X-ray fluorescence measurement showed that the purity (the content of $MoO_3$) of molybdenum trioxide (1') was 99.9% by mass.

For each molybdenum oxide powder obtained in Examples 1 to 3 and Comparative Example 1, Table 1 lists evaluation results of the content (%) of the α crystals, average crystallite size of the α crystals (nm), average crystallite size of the β crystals (nm), average particle diameter $D_{50}$ (nm), average particle diameter by TEM (nm), average particle diameter by SEM (nm), shape, BET specific surface area (m²/g), purity (the content of $MoO_3$ (% by mass)), and conversion rate to $MoS_2$. Table 2 lists the measurement results of the crystallite size of each molybdenum trioxide powder.

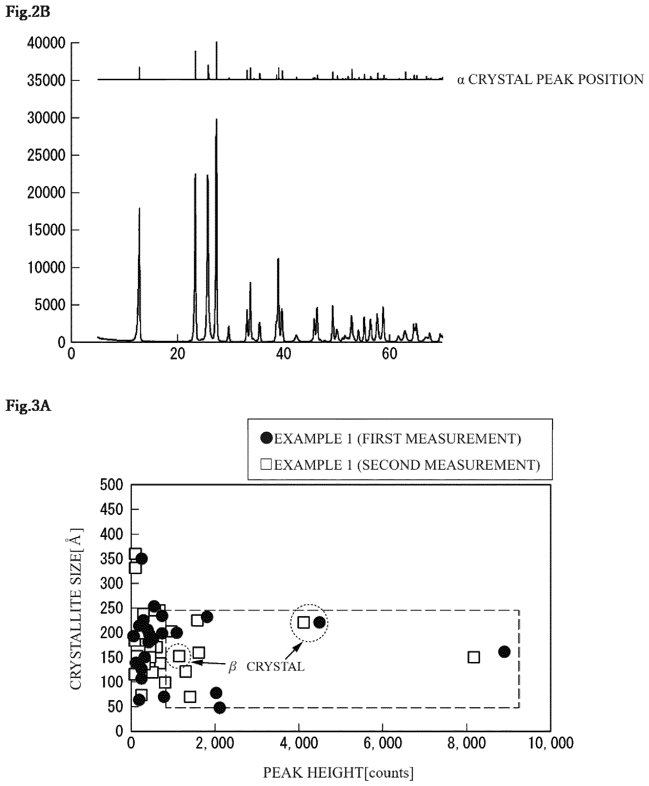

FIG. 2A is an XRD profile for Example 1, an α crystal peak position diagram in the uppermost row, and a β crystal peak position diagram in the row therebelow (the middle row). FIG. 2B is an XRD profile for Comparative Example 1 and an α crystal peak position diagram in the upper row.

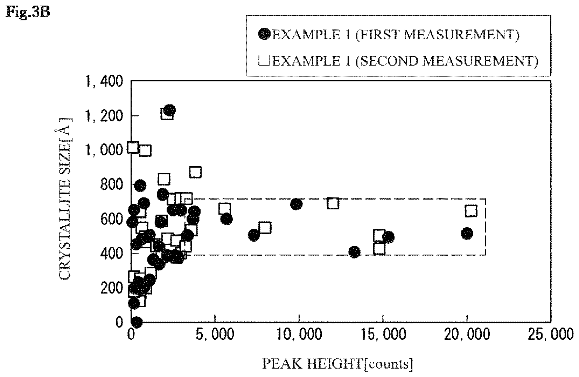

FIG. 3A is an analysis diagram of crystallite size and diffraction intensity for Example 1. FIG. 3B is an analysis diagram of crystallite size and diffraction intensity for Comparative Example 1.

Table 1]

| | Content of α crystals (%) | Average crystallite size of α crystals (nm) | Average crystallite size of β crystals (nm) | Average particle diameter D50 (nm) | Average particle diameter by TEM (nm) | Average particle diameter by SEM (nm) | Shape | BET (m²/g) | Content of $MoO_3$ (% by mass) | Conversion rate to $MoS_2$ |
|---|---|---|---|---|---|---|---|---|---|---|
| Example 1 | 30 | 15.2 | 16.8 | 87.8 | 46 | 45 | Ribbon, particle | 97.7 | 99.9 | A |
| Example 2 | 100 | 20.4 | - | 357 | 230 | 260 | Ribbon, needle | 24.8 | 99.9 | A |
| Example 3 | 100 | 27.6 | - | 463 | 290 | 280 | Ribbon, particle | 24.0 | 99.9 | A |
| Comparative Example 1 | 100 | 57.0 | - | 2,560 | - | 2,170 | Particle | 0.9 | 99.9 | B |

[Table 2]

| | Crystallite size/nm | | | |
|---|---|---|---|---|
| | Overall average value | α average value | β average value | Range |
| Comparative Example 1 | 57.0 | 57.0 | - | 40 to 72 |
| Example 2 | 20.4 | 20.4 | - | 14 to 30 |
| Example 3 | 27.6 | 27.6 | - | 21 to 37 |
| Example 1 | 15.7 | 15.2 | 16.8 | 7 to 23 |

Preferred examples of the present invention have been described, but the invention is not limited to these examples. Additions, omissions, substitutions, and other modifications in configuration can be made without departing from the gist of the present invention. The present invention is not limited by the foregoing description but limited only by the scope of the appended claims.

Reference Signs List

1   production apparatus
2   calcining furnace
3   cooling pipe
4   collection device
5   discharge port
6   opening degree adjustment damper
7   observation window
8   air exhauster
9   external cooling device

**Claims**

1.  A molybdenum trioxide powder comprising an aggregate of primary particles containing a crystal structure of molybdenum trioxide,

    the crystal structure containing α crystals with an average crystallite size of 50 nm or less, and
    a median diameter $D_{50}$ of the primary particles being 2,000 nm or less determined by dynamic light scattering.

2.  The molybdenum trioxide powder according to claim 1, wherein a content of $MoO_3$ is 99.5% by mass or more with respect to a total weight of the molybdenum trioxide powder measured by X-ray fluorescence (XRF).

3.  The molybdenum trioxide powder according to claim 1 or 2, which has a specific surface area of 10 $m^2$/g or more measured by a BET method.

4.  The molybdenum trioxide powder according to any one of claims 1 to 3, wherein the crystal structure further contains β crystals with an average crystallite size of 50 nm or less.

5.  The molybdenum trioxide powder according to claim 4, wherein a ratio (β (011)/α (021)) of intensity of a peak attributed to the plane (011) of a β crystal of $MoO_3$ to intensity of a peak attributed to the plane (021) of the α crystal of $MoO_3$ is 0.1 or more in a profile obtained by powder X-ray diffraction (XRD) using Cu-Kα rays as an X-ray source.

6.  The molybdenum trioxide powder according to claim 5, wherein the ratio (β (011)/α (021)) of the intensity of the peak attributed to the plane (011) of the β crystal of $MoO_3$ to the intensity of the peak attributed to the plane (021) of the α crystal of $MoO_3$ is 10.0 or less in a profile obtained by the powder X-ray diffraction (XRD) using the Cu-Kα rays as the X-ray source.

7. The molybdenum trioxide powder according to any one of claims 1 to 6, wherein the primary particles have a ribbon shape or a sheet shape.

8. A method for producing the molybdenum trioxide powder according to any one of claims 1 to 7, the method comprising:

vaporizing a molybdenum oxide precursor compound to form molybdenum trioxide vapor; and
cooling the molybdenum trioxide vapor.

9. The method for producing the molybdenum trioxide powder according to claim 8, further comprising calcining a raw material mixture containing a molybdenum oxide precursor compound and a metal compound other than the molybdenum oxide precursor compound to vaporize the molybdenum oxide precursor compound and form molybdenum trioxide vapor, wherein
a ratio of the metal compound to 100% by mass of the raw material mixture is 95% by mass or less in terms of oxide.

Fig.1

Fig.2A

α CRYSTAL PEAK POSITION

β CRYSTAL PEAK POSITION

**Fig.2B**

α CRYSTAL PEAK POSITION

**Fig.3A**

Fig.3B

## INTERNATIONAL SEARCH REPORT

| | International application No. |
|---|---|
| | **PCT/JP2022/012990** |

**A. CLASSIFICATION OF SUBJECT MATTER**

*C01G 39/02*(2006.01)i
FI: C01G39/02 ZNM

According to International Patent Classification (IPC) or to both national classification and IPC

**B. FIELDS SEARCHED**

Minimum documentation searched (classification system followed by classification symbols)

C01G39/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/181723 A1 (DIC CORPORATION) 26 September 2019 (2019-09-26) paragraphs [0057]-[0061] | 1-9 |
| A | JP 2019-501107 A (HUBEI ZHONGAO NANO MATERIAL TECHNOLOGY COMPANY, LIMITED) 17 January 2019 (2019-01-17) entire text, all drawings | 1-9 |
| A | CN 103342388 A (BEIJING UNIVERSITY OF CHEMICAL TECHNOLOGY) 09 October 2013 (2013-10-09) entire text, all drawings | 1-9 |
| A | CN 105645470 A (TIANJIN POLYTECHNIC UNIVERSITY) 08 June 2016 (2016-06-08) entire text, all drawings | 1-9 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/012990**

| Patent document cited in search report | | | Publication date (day/month/year) | Patent family member(s) | | | Publication date (day/month/year) |
|---|---|---|---|---|---|---|---|
| WO | 2019/181723 | A1 | 26 September 2019 | US | 2021/0053037 | A1 | |
| | | | | paragraphs [0074]-[0079] | | | |
| | | | | EP | 3770120 | A1 | |
| | | | | CN | 111886203 | A | |
| | | | | KR 10-2020-0130807 | | A | |
| JP | 2019-501107 | A | 17 January 2019 | US | 2018/0346344 | A1 | |
| | | | | entire text, all drawings | | | |
| | | | | WO | 2017/092712 | A1 | |
| | | | | CN | 105347400 | A | |
| CN | 103342388 | A | 09 October 2013 | (Family: none) | | | |
| CN | 105645470 | A | 08 June 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021050489 A
- WO 2018003481 A
- JP 2011516378 T